# EUROPÄISCHE PATENTANMELDUNG

(11) **EP 3 636 212 A1**
(43) Veröffentlichungstag der Anmeldung: **15.04.2020**
(21) Anmeldenummer: 18199941.8
(22) Anmeldetag: 11.10.2018
(51) Int. Cl.: A61C 13/01, A61C 13/08, A61C 13/10, A61C 13/00

(54) **VERFAHREN ZUR HERSTELLUNG EINES DENTALRESTAURATIONSTEILES**

(71) Anmelder: Ivoclar Vivadent AG, 9494 Schaan (LI)
(72) Erfinder: Häfele, Clemens Andreas, 6837 Weiler (AT); Hagenbuch, Konrad, 9469 Haag (CH); Frei, Roger, 9436 Balgach (CH); Teichmann, Sabrina, 9470 Buchs (CH)
(74) Vertreter: Splanemann

(57) **Zusammenfassung**

Es ist ein Verfahren zur Herstellung eines Dentalrestaurationsteiles nach patientenspezifischen Vorgaben vorgesehen, welches Dentalrestaurationsteil eine Prothesenbasis umfasst, wobei die Prothesenbasis mindestens einen vorgefertigten künstlichen Zahn, insbesondere eine Vielzahl von vorgefertigten künstlichen Zähnen trägt.

Es ist ferner vorgesehen, dass die Prothesenbasis auf der den vorgefertigten künstlichen Zähnen abgewandten, also diesen gegenüber liegenden Seite eine Oberfläche aufweist und mittels eines dreidimensionalen additiven Verfahrens auf diese Oberfläche der Prothesenbasis ein schichtweiser 3-dimensionaler Materialauftrag erfolgt, durch den die Prothesenbasis gemäß den patientenspezifischen Vorgaben erstellt wird.

## Beschreibung

Die vorliegende Erfindung betrifft ein Verfahren zur Herstellung eines Dentalrestaurationsteils gemäß dem Oberbegriff von Anspruch 1 sowie ein Vorfabrikat des Dentalrestaurationsteils gemäß dem Oberbegriff von Anspruch 12, welches erfindungsgemäß als Prothese mit vorgefertigten künstlichen Zähnen ausgestaltet ist.

Dentale Prothesen mit künstlichen Zähnen sind seit langem bekannt. Neben dem recht arbeits- und zeitaufwändigen Verfahren, um ein befriedigendes Okklusionsergebnis zu erzielen und hierzu eine individuell abgeformte Prothesenbasis mit einer Vielzahl von künstlichen Zähnen zu versehen, gibt es bereits Verfahren, die mit vorgefertigten Zahnbögen arbeiten. Dadurch entfällt das arbeitsintensive Einsetzen und Ausrichten der einzelnen künstlichen Zähne.

Um einen passgenauen Sitz der Prothesenbasis auf dem Kieferkamm des Patienten zu gewährleisten, muss die Prothesenbasis jedoch immer an den individuellen Kieferkamm des Patienten angepasst werden, was ebenfalls recht zeitaufwändig ist.

Ein computergestütztes Verfahren, eine vorgefertigte standardisierte Prothesenbasis entsprechend einem 3D-Scan des Kieferkamms des Patienten, beschreibt die EP 2 742 907 1 ("Basales Beschleifen"). Hier werden die künstlichen Zähne in für diese vorbereitete Öffnungen in der Prothesenbasis geklebt, wobei sich die Zahnhälse der künstlichen Standardzähne teilweise durch die Prothesenbasis hindurch erstrecken. Nach dem Aushärten der Klebeverbindungen wird unter softwareseitiger Berücksichtigung einer minimal verbleibenden Klebefläche zwischen Zahn und Prothesenbasis die Rückseite der Prothesenbasis computergesteuert so beschliffen, dass die so entstehende Form der Negativform des Kieferkamms des Patienten entspricht und über die Prothesenbasis überstehende Zahnhälse im selben Arbeitsgang mit abgeschliffen und insofern passgenau gekürzt werden.

Trotz der Vereinfachung der Herstellung einer patientenspezifischen Prothesenbasis durch abrasive Verfahren besteht weiterhin der Wunsch, die Anpassung der Prothesenbasis weiter zu vereinfachen und zu beschleunigen, bei gleichzeitig weiterhin optimaler Passgenauigkeit der Prothesenbasis, um ein angenehmes und schmerzfreies Tragegefühl zu ermöglichen.

Deshalb besteht die Aufgabe der vorliegenden Erfindung darin, ein Verfahren gemäß dem Oberbegriff von Anspruch 1, sowie ein Vorfabrikat gemäß dem Oberbegriff von Anspruch 12 zu schaffen, welches durch die Anwendung eines additiven Verfahrens den Aufbau einer patientenspezifischen Anpassung bzw. Formung einer standardisierten Prothesenbasis ermöglicht, sowie ein Vorfabrikat für die Herstellung einer patientenspezifischen Dentalrestauration, also einer Zahnprothese bereitzustellen.

Diese Aufgabe wird erfindungsgemäß durch das Verfahren gemäß Anspruch 1 sowie durch das Vorfabrikat gemäß Anspruch 12 gelöst. Vorteilhafte Ausgestaltungen ergeben sich aus den Unteransprüchen.

Erfindungsgemäß wird auf einen parabel- oder teilellipsenförmigen Zahnmaterial-Prothesenmaterial-Körper durch ein dreidimensionales Verfahren wie beispielweise durch Stereolithografie schichtweise Material aufgebracht, um dadurch die Prothesenbasis final zu formen. Dies erfolgt computergesteuert durch CAD/CAM, wobei vorab digitale Scandaten des Kieferkamms des Patienten erfasst und bearbeitet bzw. für die CAM-Produktion aufbereitet wurden.

Alternativ ist anstelle dessen auch eine subtraktives Verfahren, wie z.B. ein Fräsverfahren, oder der Einsatz der Presstechnik möglich.

Anstelle von Einzelzähnen können hier auch Zahnbögen oder Teilzahnbögen verwendet werden.

In einer weiteren Ausführungsform ist es vorgesehen, anstelle von Vollprothesen Teilprothesen zu fertigen, wobei zu dem Vorstehenden analogen Schritte durchgeführt werden.

Prothesen für Oberkiefer und Unterkiefer können auch derart vorfabriziert werden, dass sie ohne okklusale Störkontakte zueinander passen.

Hierbei sind die Zähne zueinander in der okkussalen, also waagrechten Ebene ausgerichtet. Die Okkusalebene wird so automatisch berücksichtigt, Patientenzahnfleischinformation werden ebenso berücksichtigt bzw. werden gemeinsam berechnet. So entsteht eine ästhetische finale Prothese mit der restlich aufzutragenden Prothesenbasisoberfläche.

Der bei Unterkieferprothesen etwa parabelförmige oder der bei Oberkieferprothesen etwa teilellipsenförmige Grundkörper der Prothesenbasis, mit dem einzelne Zähne oder eine Vielzahl von künstlichen Zähnen ebenso wie ganz Zahnbögen verbunden sein können, kann fest oder flexibel sein. Auch ist es möglich, dass der Grundkörper thermisch verformbar ist, also durch Erwärmen eine Formanpassung möglich ist, die nach Abkühlung erhalten bleibt.

Die künstlichen Zähne sind fest mit dem Grundkörper der Prothesenbasis verbunden. Auf der den künstlichen Zähnen gegenüber liegenden Seite des Prothesengrundkörpers befindet sich eine Oberfläche, die in einer Ausführungsform eine plane Oberfläche ist. Diese Oberfläche kann auch eine von einer planen Oberfläche abweichende Form haben. Wesentlich ist nur, dass die auf der gegenüber liegenden Seite eingesetzten künstlichen Zähne oder der Zahnbogen rückseitig, also mit ihren Zahnhälsen, nicht über die mit dem dreidimensionalen additiven Verfahren zu beschichtende Oberfläche hinaus ragen.

Zur Vergrößerung des Oberflächeninhaltes kann die vorstehend beschriebene Oberfläche aufgeraut oder durch Rillen oder jede andere geeignete Struktur, die in die Oberfläche eingebracht werden, vorbereitet werden. Hiermit wird eine bessere Haftung der Schichten, die durch das dreidimensionale additive Verfahren auf den Prothesengrundkörper aufgebracht werden, erreicht. Um die Anhaftung der aufzubringenden Schichten noch weiter zu verbessern, kann zusätzlich eine Vorbehandlung der Oberfläche durch einen Primer oder ähnliche Substanzen erfolgen.

Nach der beschriebenen Vorbereitung der Oberfläche wird, auf Basis der Daten, die für den entsprechend dem Patienten ausgewählten Prothesengrundkörper in der CAD-Vorrichtung hinterlegt sind, die computergestützte Fertigung (CAM) der patientenspezifischen Prothesenbasis vorgenommen. Hierzu wird, basierend auf den 3D-Scandaten des Patienten, mittels eines dreidimensionalen additiven Verfahrens wie beispielsweise der Stereolithgrafie, schichtweise ein geeignetes Material aufgetragen.

Geeignete Materialien sind z.B. Acrylate oder Methacrylate, aber auch jedes andere biokompatible Material, dass sich mit dem gewählten dreidimensionalen additiven Verfahren auf den Prothesengrundkörper aufbringen lässt. Das entsprechende Material ist hierbei vorzugsweise einfarbig und hat den selben Farbton wie der Prothesengrundkörper. Hierdurch kann ein ästhetisch hochwertiges Ergebnis erreicht werden, da der Übergang zwischen dem vorgeformten Standard-Prothesengrundkörper und dem additiv aufgetragenden Material so gut wie unsichtbar wird.

Bei Realisierung der von vorgefertigten künstlichen Zähnen abgewandten Oberfläche der Prothesenbasis als eine plane Oberfläche lassen sich schichtaufbauende Verfahren wie die Stereolithographie besonders gut einsetzen.

Durch Vorbehandeln der Oberfläche wie Aufrauhen oder Auftragen eines Primers lässt sich die Haftung verbessern.
Weitere Vorteile, Einzelheiten und Merkmale ergeben sich aus der nachfolgenden Beschreibung eines Ausführungsbeispiels der Erfindung anhand der Zeichnungen.

Es zeigen:
- Fig. 1 a - c: eine schematisierte Abbildung des erfindungsgemäßen Prothesengrund körpers,
- Fig. 2: den Materialauftrag während des dreidimensionalen additiven Verfahrens,
- Fig. 3: eine Schnittansicht der erfindungsgemäßen Prothesenbasis nach der Fertig stellung nach dem Verfahren gemäß Fig. 2, und
- Fig. 4: eine schematische Darstellung des computergesteuerten Materialauftrags von Prothesenmaterial.

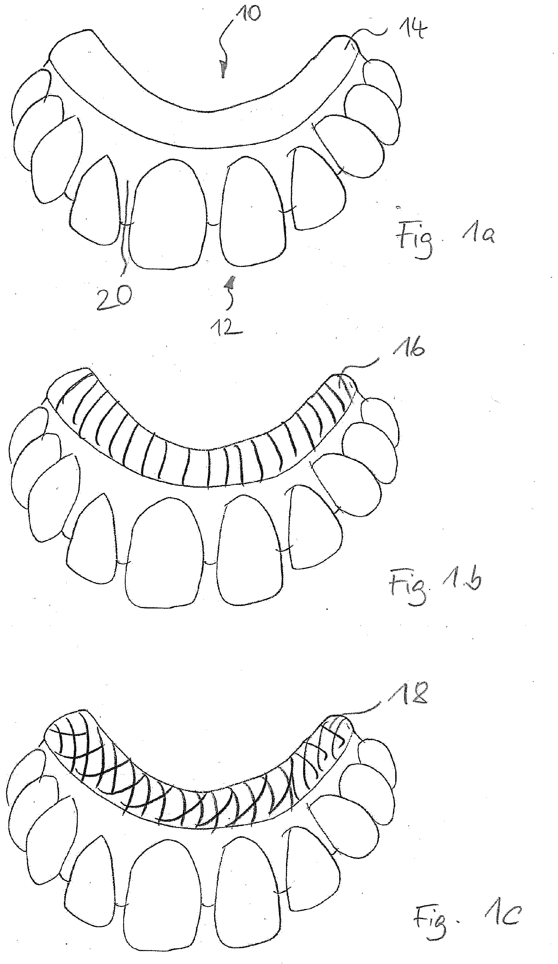

Aus Fig. 1a ist ein stark schematisierter Prothesengrundkörper 10 ersichtlich. In den Grundkörper 10 ist ein Zahnbogen 12, bestehend aus mehreren künstlichen Zähnen, eingeklebt. Das Material 20 des Prothesengrundkörpers bettet den Zahnbogen 12 an dessen Zahnhälsen vollständig ein. Dem Zahnbogen 12 gegenüber liegend befindet sich die Oberfläche 14, die in dieser Ausgestaltungsform annähernd plan ist.

In der Fig. 1b ist die Oberfläche 14 mit Rillen versehen dargestellt, in der Fig. 1c mit einer stärker strukturierten Fläche, in diesem Fall einer kreuzförmigen Struktur. Neben den hier dargestellten Strukturen kann die Oberfläche 14 selbstverständlich auch jede andere Form der Oberflächenbehandlung wie beispielsweise eine Aufrauung aufweisen, die bewirkt, dass der wirksame Flächeninhalt der Oberfläche 14 vergrößert wird und dadurch die Anhaftung der erfindungsgemäß aufzutragenden Flächen verbessert wird.

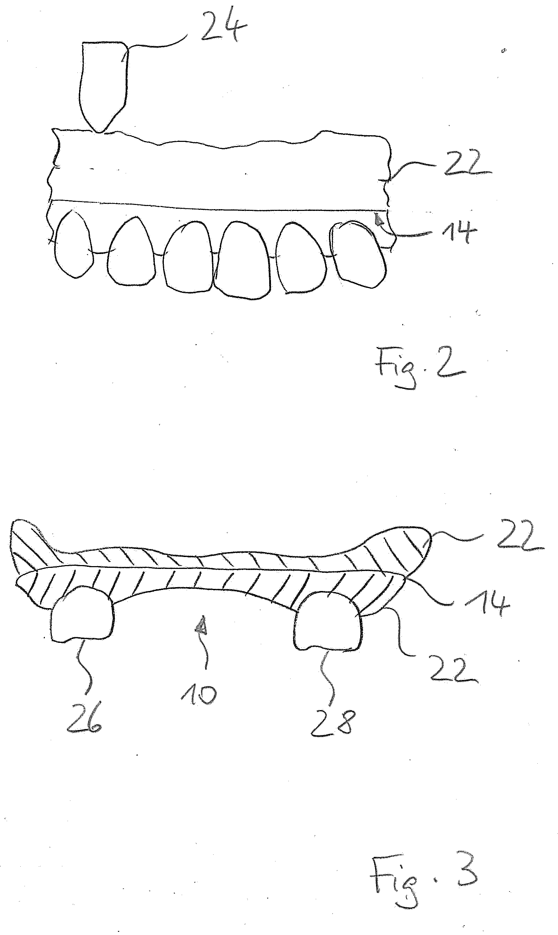

Fig. 2 zeigt, wie gemäß dem erfindungsgemäßen Verfahren Material 22, z.B. Acrylate oder Methacrylate, auf die Oberfläche 14 mittels einer Ausgabevorrichtung 24 aufgebracht wird. Die Dicke des Materialauftrages ist in der Fig. 2 aus Gründen der besseren Anschaulichkeit deutlich überhöht dargestellt.

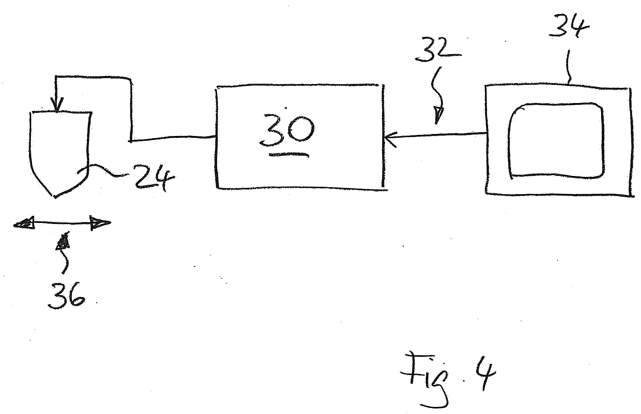

Die Ausgabevorrichtung 24 fährt, gesteuert durch die CAM-Vorrichtung 30, die in Fig. 4 schematisch dargestellt ist, rasterartig und wiederkehrend über die Oberfläche 14, was durch den Doppelpfeil 36 angedeutet ist, und gibt, entsprechend den von der CAD-Vorrichtung 34 zur Verfügung gestellten Daten 32, Material ab. Durch die entsprechend den Daten 32 und der aktuellen Rasterposition der Ausgabevorrichtung 24 aktivierte oder unterbundene Materialabgabe ergibt sich eine 3D-Struktur, die der Negativform des Kieferkamms des Patienten entspricht, die zuvor durch einen 3D-Scanprozess erfasst worden ist.

In Fig. 3 ist eine Schnittdarstelllung zu sehen, wobei der Schnitt quer durch die Prothesenbasis von einem Molaren 26 zu einem diesem gegenüber liegenden Molaren 28 verläuft. In dieser Abbildung ist gut zu erkennen, wie die einzelnen künstlichen Zähne 26, 28 in dem Material 20 des Prothesengrundkörpers sitzen. Die Zähne 26, 28 sind dort mittels eines geeigneten Klebers befestigt. Oberhalb der Oberfläche 14 ist in Fig. 3 sehr gut die durch das erfindungsgemäße Auftragen der Schichten des Materials 22 erzeugte Kontur der Prothesenbasis erkennbar.

Durch die Verwendung eines Standard-Grundkörpers in Verbindung mit dem 3D-Verfahren zum Materialauftrag ist es sehr einfach möglich, Prothesen mit einer patientenspezifischen Prothesenbasis mit einer hohen Passgenauigkeit und einem dementsprechend hohen Tragekomfort zu fertigen, die hohen ästhetischen Ansprüchen genügen und trotzdem mit vergleichweise geringem Zeit- und Arbeitsaufwand herstellbar sind.

## Patentansprüche

**1.** Verfahren zur Herstellung eines Dentalrestaurationsteiles nach patientenspezifischen Vorgaben, welches Dentalrestaurationsteil eine Prothesenbasis umfasst, wobei die Prothesenbasis mindestens einen vorgefertigten künstlichen Zahn, insbesondere eine Vielzahl von vorgefertigten künstlichen Zähnen trägt, **dadurch gekennzeichnet, dass**
die Prothesenbasis auf der den vorgefertigten künstlichen Zähnen abgewandten, also diesen gegenüber liegenden Seite eine Oberfläche aufweist und mittels eines dreidimensionalen additiven Verfahrens auf diese Oberfläche der Prothesenbasis ein schichtweiser 3-dimensionaler Materialauftrag erfolgt, durch den die Prothesenbasis gemäß den patientenspezifischen Vorgaben erstellt wird.

**2.** Verfahren nach Anspruch 1, **dadurch gekennzeichnet, dass** es sich bei der den vorgefertigten künstlichen Zähnen abgewandten Oberfläche der Prothesenbasis um eine plane Oberfläche handelt.

**3.** Verfahren nach Anspruch 1 oder 2, **dadurch gekennzeichnet, dass** es sich bei dem additiven Verfahren um eine 3D-Druckverfahren, insbesondere um Stereolithographie handelt.

**3.** Verfahren nach einem der vorangegangenen Ansprüche, **dadurch gekennzeichnet, dass** der schichtweise Materialauftrag, insbesondere mithilfe einer CAD/CAM-Vorrichtung, in der Art erfolgt, dass die durch den Materialauftrag erzeugte 3-dimensionale Form dem Negativabbild des Kieferkamms des Patienten entspricht.

**4.** Verfahren nach einem der vorangegangenen Ansprüche, **dadurch gekennzeichnet, dass** vor dem schichtweisen Materialauftrag auf die den vorgefertigten künstlichen Zähnen abgewandten Oberfläche der Prothesenbasis diese Oberfläche, insbesondere durch Aufrauen, Rillen oder Strukturieren, zur Schaffung einer vergrößerten wirksamen Oberfläche, vorbereitet wird.

**5.** Verfahren nach einem der vorangegangenen Ansprüche, **dadurch gekennzeichnet, dass** vor dem schichtweisen Materialauftrag mittels dem dreidimensionalen additiven Verfahren auf die den vorgefertigten künstlichen Zähnen abgewandten Oberfläche der Prothesenbasis diese Oberfläche, insbesondere mit einem Primer, vorbehandelt wird.

**6.** Verfahren nach einem der vorangegangenen Ansprüche, **dadurch gekennzeichnet, dass** die Prothesenbasis aus einem Material besteht, welches sich durch Wärmeeinwirkung thermisch und plastisch verformen lässt.

**7.** Verfahren nach Anspruch 6, **dadurch gekennzeichnet, dass** die Form der plastisch verformten Prothesenbasis optisch erfasst wird und diese derart erfassten Daten an die CAD/CAM-Vorrichtung übertragen werden.

**8.** Verfahren nach einem der vorangegangenen Ansprüche, **dadurch gekennzeichnet, dass** Referenzpunkte der Prothesenbasis, insbesondere die X- und Y-Koordinaten mindestens eines vorgefertigten künstlichen Zahnes, bevorzugt von mindestens zwei vorgefertigten künstlichen Zähnen, erfasst werden und diese derart erfassten Daten an die CAD/CAM-Vorrichtung übertragen werden.

**9.** Verfahren nach einem der vorangegangenen Ansprüche, **dadurch gekennzeichnet, dass** die auf die Prothesenbasis schichtweise aufzutragenden Materialien Acrylate oder Methacrylate sind.

**10.** Verfahren nach einem der vorangegangenen Ansprüche, **dadurch gekennzeichnet, dass** das auf die Prothesenbasis schichtweise aufzutragende Material einfarbig ist.

**11.** Verfahren nach einem der vorangegangenen Ansprüche, **dadurch gekennzeichnet, dass** das auf die Prothesenbasis schichtweise aufzutragende Material farblich der Materialfarbe der Prothesenbasis entspricht.

**12.** Vorfabrikat für ein Dentalrestaurationsteil umfassend eine Prothesenbasis, wobei die Prothesenbasis mindestens einen vorgefertigten künstlichen Zahn , insbesondere eine Vielzahl von vorgefertigten künstlichen Zähnen oder einen zusammenhängenden Zahnkranz trägt, **dadurch gekennzeichnet, dass**
die Prothesenbasis auf der den vorgefertigten künstlichen Zähnen abgewandten, also diesen gegenüberliegenden Seite eine vorgefertigte Oberfläche aufweist.

**13.** Vorfabrikat nach Anspruch 12, **dadurch gekennzeichnet**, die Prothesenbasis mit der Oberfläche additiv, subtraktiv oder per Presstechnik hergestellt ist.

**14.** Dentalrestaurationsteil, hergestellt aus einem Vorfabrikat nach Anspruch 12 oder 13 umfassend eine Prothesenbasis, wobei die Prothesenbasis mindestens einen vorgefertigten künstlichen Zahn, insbesondere eine Vielzahl von vorgefertigten künstlichen Zähnen oder einen zusammenhängenden Zahnkranz trägt, **dadurch gekennzeichnet, dass** die Prothesenbasis auf der den vorgefertigten künstlichen Zähnen abgewandten, also diesen gegenüberliegenden Seite eine patientenspezifische, insbesondere additiv finalisierte Oberfläche aufweist.

## Geänderte Patentansprüche

### Geänderte Patentansprüche gemäss Regel 137(2) EPÜ.

1. Verfahren zur Herstellung eines Dentalrestaurationstelles nach patientenspezifischen Vorgaben, welches Dentalrestaurationsteil eine Prothesenbasis umfasst, wobei die Prothesenbasis mindestens einen vorgefertigten künstlichen Zahn, insbesondere eine Vielzahl von vorgefertigten künstlichen Zähnen trägt, **dadurch gekennzeichnet, dass**
die Prothesenbasis auf der den vorgefertigten künstlichen Zähnen abgewandten, also diesen gegenüber liegenden Seite eine plane Oberfläche aufweist und mittels eines dreidimensionalen additiven Verfahrens auf diese Oberfläche der Prothesenbasis ein schichtweiser 3-dimensionaler Materialauftrag erfolgt, durch den die Prothesenbasis gemäß den patientenspezifischen Vorgaben final geformt wird, wobei der schichtweise Materialauftrag mithilfe einer CAD/CAM-Vorrichtung in der Art erfolgt, dass die durch den Materialauftrag erzeugte 3-dimensionale Form dem Negativabbild des Kieferkamms des Patienten entspricht.

2. Verfahren nach Anspruch 1, **dadurch gekennzeichnet, dass** es sich bei dem additiven Verfahren um eine 3D-Druckverfahren, insbesondere um Stereolithographie handelt.

3. Verfahren nach einem der vorangegangenen Ansprüche, **dadurch gekennzeichnet, dass** vor dem schichtweisen Materialauftrag auf die den vorgefertigten künstlichen Zähnen abgewandten Oberfläche der Prothesenbasis diese Oberfläche durch Aufrauen, Rillen oder Strukturieren, zur Schaffung einer vergrößerten wirksamen Oberfläche, vorbereitet wird.

4. Verfahren nach einem der vorangegangenen Ansprüche, **dadurch gekennzeichnet, dass** vor dem schichtweisen Materialauftrag mittels dem dreidimensionalen additiven Verfahren auf die den vorgefertigten künstlichen Zähnen abgewandten Oberfläche der Prothesenbasis diese Oberfläche mit einem Primer vorbehandelt wird.

5. Verfahren nach einem der vorangegangenen Ansprüche, **dadurch gekennzeichnet, dass** die Prothesenbasis aus einem Material besteht, welches sich durch Wärmeeinwirkung thermisch und plastisch verformen lässt.

6. Verfahren nach Anspruch 6, **dadurch gekennzeichnet, dass** die Form der plastisch verformten Prothesenbasis optisch erfasst wird und diese derart erfassten Daten an die CAD/CAM-Vorrichtung übertragen werden.

7. Verfahren nach einem der vorangegangenen Ansprüche, **dadurch gekennzeichnet, dass** Referenzpunkte der Prothesenbasis die X- und Y-Koordinaten mindestens eines vorgefertigten künstlichen Zahnes, bevorzugt von mindestens zwei vorgefertigten künstlichen Zähnen, erfasst werden und diese derart erfassten Daten an die CAD/CAM-Vorrichtung übertragen werden.

8. Verfahren nach einem der vorangegangenen Ansprüche, **dadurch gekennzeichnet, dass** die auf die Prothesenbasis schichtweise aufzutragenden Materialien Acrylate oder Methacrylate sind.

9. Verfahren nach einem der vorangegangenen Ansprüche, **dadurch gekennzeichnet, dass** das auf die Prothesenbasis schichtweise aufzutragende Material einfarbig ist.

10. Verfahren nach einem der vorangegangenen Ansprüche, **dadurch gekennzeichnet, dass** das auf die Prothesenbasis schichtweise aufzutragende Material farblich der Materialfarbe der Prothesenbasis entspricht.

11. Vorfabrikat für ein Dentalrestaurationsteil umfassend eine Prothesenbasis, wobei die Prothesenbasis mindestens einen vorgefertigten künstlichen Zahn, insbesondere eine Vielzahl von vorgefertigten künstlichen Zähnen oder einen zusammenhängenden Zahnkranz trägt, **dadurch gekennzeichnet, dass**
die Prothesenbasis auf der den vorgefertigten künstlichen Zähnen abgewandten, also diesen gegenüberliegenden Seite eine vorgefertigte plane Oberfläche aufweist.

12. Vorfabrikat nach Anspruch 11, **dadurch gekennzeichnet**, die Prothesenbasis mit der Oberfläche additiv, subtraktiv oder per Presstechnik hergestellt ist.

13. Dentalrestaurationsteil, hergestellt aus einem Vorfabrikat nach Anspruch 11 oder 12 umfassend eine Prothesenbasis, wobei die Prothesenbasis mindestens einen vorgefertigten künstlichen Zahn, insbesondere eine Vielzahl von vorgefertigten künstlichen Zähnen oder einen zusammenhängenden Zahnkranz trägt, **dadurch gekennzeichnet, dass** die Prothesenbasis auf der den vorgefertigten künstlichen Zähnen abgewandten, also diesen gegenüberliegenden Seite eine plane Oberfläche aufweist, wobei nach einem schichtweisen 3-dimensionalen Materialauftrag auf die plane Oberfläche, eine patientenspezifische additiv finalisierte Oberfläche der Prothesenbasis realisierbar ist.
